(19) Europäisches Patentamt
European Patent Office
Office européen des brevets

(11) **EP 4 629 562 A1**

(12) **EUROPEAN PATENT APPLICATION**

(43) Date of publication:
**08.10.2025 Bulletin 2025/41**

(21) Application number: **24220011.1**

(22) Date of filing: **13.12.2024**

(51) International Patent Classification (IPC):
**H04L 9/40** *(2022.01)*

(52) Cooperative Patent Classification (CPC):
**H04L 63/0876**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2024 SG 10202400982**

(71) Applicant: **Advanced Nova Technologies
(Singapore)
Holding Pte. Ltd.
Singapore 189773 (SG)**

(72) Inventors:
• **TAN, Xiao**
  **189773 Singapore (SG)**
• **ZHU, Jiaming**
  **189773 Singapore (SG)**
• **WU, Di**
  **189773 Singapore (SG)**
• **CHEN, Shuai**
  **189773 Singapore (SG)**

(74) Representative: **Fish & Richardson P.C.
Highlight Business Towers
Mies-van-der-Rohe-Straße 8
80807 München (DE)**

(54) **IDENTITY VERIFICATION METHOD AND DEVICE, AND STORAGE MEDIUM**

(57)      This specification provides an identity verification method and device, and a storage medium. In the method, in response to an identity verification request sent by a terminal device, a verification device obtains a target account of an application corresponding to the identity verification request, a first hardware parameter of the terminal device, and a second hardware parameter corresponding to the target account; and obtains a distribution status of each device model in a device that uses the application; and then the verification device can determine, based on the obtained parameter and distribution status, whether the terminal device is a commonly used device corresponding to the target account; and then indicate, based on a determining result, the terminal device to or not to initiate an identity verification procedure for a user.

P100

In response to an identity verification request sent by a terminal device, obtain a target account of an application corresponding to the identity verification request and a first hardware parameter of the terminal device, where the first hardware parameter is a parameter that represents a device model of the terminal device — S110

Obtain a second hardware parameter corresponding to the target account, and obtain device model distribution information, where the second hardware parameter is a parameter that represents a device model of a commonly used device corresponding to the target account, and the device model distribution information represents a distribution status of each device model in a device that uses the application — S120

Determine, based on the first hardware parameter, the second hardware parameter, and the device model distribution information, whether the terminal device is the commonly used device of the target account, to obtain a first determining result — S130

Indicate, based on the first determining result, the terminal device to skip or trigger an identity verification procedure — S140

FIG. 3

## Description

## TECHNICAL FIELD

This specification relates to the field of Internet technologies, and in particular, to an identity verification method and device, and a storage medium.

## BACKGROUND

When a user uses an application (APP) with a relatively high security requirement on a terminal device, for example, when the user logs in to a payment APP, or when the user initiates a payment in the APP, the APP may be triggered to verify an identity of the user. Usually, the APP can verify the identity of the user through biometric identity verification, by using a verification code, or in another manner, to ensure security of using the APP by the user. For example, the APP uses biometric identity verification, that is, the APP verifies the identity of the user by collecting a biometric feature of the user. The biometric features is, for example, a facial image and a fingerprint. If an APP system is compromised by a hacker, privacy disclosure of the user is caused. Therefore, the user gradually resists this verification manner. When the APP performs identity verification by using the verification code, the APP needs to cooperate with a communication operator. In some regions, SMS costs are relatively high. Therefore, this verification manner is relatively high in cost.

Content in the background is merely information known to the inventor, and neither means that the information has entered the public domain before the application date of this disclosure, nor means that the information can become the existing technology of this disclosure.

## SUMMARY

This specification provides an identity verification method and device, and a storage medium, to minimize triggering of an identity verification procedure such as biometric identity verification or verification code identity verification for a user, so as to ensure security of using an APP by the user, consider verification costs, and reduce a concern of the user for privacy.

According to a first aspect, this specification provides an identity verification method, including: in response to an identity verification request sent by a terminal device, obtaining a target account of an application corresponding to the identity verification request and a first hardware parameter of the terminal device, where the first hardware parameter is a parameter that represents a device model of the terminal device; obtaining a second hardware parameter corresponding to the target account, and obtaining device model distribution information, where the second hardware parameter is a parameter that represents a device model of a commonly used device corresponding to the target account, and the device model distribution information represents a distribution status of each device model in a device that uses the application; determining, based on the first hardware parameter, the second hardware parameter, and the device model distribution information, whether the terminal device is the commonly used device of the target account, to obtain a first determining result; and indicating, based on the first determining result, the terminal device to skip or trigger an identity verification procedure.

According to a second aspect, this specification further provides an electronic device, including: at least one storage medium that stores at least one instruction set used to perform identity verification; and at least one processor that is communicatively connected to the at least one storage medium. The at least one processor reads the at least one instruction set when running, and performs the following operations based on an indication of the at least one instruction set: in response to an identity verification request sent by a terminal device, obtaining a target account of an application corresponding to the identity verification request and a first hardware parameter of the terminal device, where the first hardware parameter is a parameter that represents a device model of the terminal device; obtaining a second hardware parameter corresponding to the target account, and obtaining device model distribution information, where the second hardware parameter is a parameter that represents a device model of a commonly used device corresponding to the target account, and the device model distribution information represents a distribution status of each device model in a device that uses the application; determining, based on the first hardware parameter, the second hardware parameter, and the device model distribution information, whether the terminal device is the commonly used device of the target account, to obtain a first determining result; and indicating, based on the first determining result, the terminal device to skip or trigger an identity verification procedure.

According to a third aspect, this specification provides a computer-readable non-transitory storage medium. The computer-readable non-transitory storage medium stores at least one instruction set. When the at least one instruction set is executed by at least one processor, the identity verification method according to the first aspect is implemented.

It can be learned from the above-mentioned technical solution that according to the identity verification method and device, and the storage medium provided in this specification, after receiving the identity verification request sent by the terminal device, the target account corresponding to the identity verification request and the first hardware parameter of the terminal device can be obtained, the second hardware parameter corresponding to the target account and the device model distribution information that represents the distribution status of each device model in the device that uses the APP can be obtained, then it can be determined, based on the first hardware parameter, the second hardware parameter, and the device model distribution information, whether the terminal device is the commonly used device of the target account, and then whether the terminal device needs to enable the identity verification procedure for the user is indicated based on the determining result. It can be learned that in the solution provided in this specification, by collecting a parameter related to the device model of the terminal device and with reference to the device model distribution information, it can be accurately identified whether the terminal device is the commonly used device of the target account. When it is identified that the terminal device is the commonly used device, identity verification on the user can be skipped, that is, identity verification performed on the user in a manner such as using a biometric feature or a verification code can be reduced, to reduce verification costs and consider a concern of the user for privacy. When it is identified that the terminal device is not the commonly used device, identity verification on the user is triggered, that is, when verification on the terminal device fails and there is a specific potential security risk, identity verification on the user is selected, to ensure security of using the APP by the user.

Other functions of the identity verification method and device, and the storage medium provided in this specification are listed in the following descriptions. Based on the descriptions, content described by using the following numbers and examples is clear to a person of ordinary skill in the art. Creative aspects of the identity verification method and device, and the storage medium provided in this specification can be fully explained by practice or by using the methods, apparatuses, and combinations described in the following detailed examples.

**BRIEF DESCRIPTION OF DRAWINGS**

To describe the technical solutions in the embodiments of this specification more clearly, the following briefly describes the accompanying drawings needed for describing the embodiments. Clearly, the accompanying drawings in the following description show merely some embodiments of this specification, and a person of ordinary skill in the art can derive other drawings from these accompanying drawings without creative efforts.

FIG. 1 is a schematic diagram of an application scenario of identity verification according to an embodiment of this specification;
FIG. 2 is a diagram of a hardware structure of an electronic device according to an embodiment of this specification;
FIG. 3 is a flowchart of an identity verification method according to an embodiment of this specification;
FIG. 4 is a schematic diagram of a correspondence between a device model and a target account;
FIG. 5 is a schematic flowchart of execution logic of an electronic device;
FIG. 6 is a schematic flowchart of other execution logic of an electronic device; and
FIG. 7 is a schematic flowchart of still other execution logic of an electronic device.

**DESCRIPTION OF EMBODIMENTS**

The following descriptions provide specific application scenarios and requirements of this specification, to enable a person skilled in the art to manufacture and use the content of this specification. Various local modifications to the disclosed embodiments are clear to a person skilled in the art. In addition, the general principles defined herein can be applied to other embodiments and applications without departing from the spirit and scope of this specification. Therefore, this specification is not limited to the shown embodiments, but has a widest scope consistent with the claims.

The terms used herein are merely intended to describe specific example embodiments, and impose no limitation. For example, unless otherwise explicitly stated in the context, the singular forms "one", "an", and "the" used herein can include plural forms. When being used in this specification, the terms "include", "comprise", and/or "contain" mean existence of an associated integer, step, operation, element, and/or component, but does not preclude existence of one or more other features, integers, steps, operations, elements, components, and/or groups or addition of other features, integers, steps, operations, elements, components, and/or groups to the system/method.

In consideration of the following descriptions, these and other features of this specification, operations and functions of related components of the structure, and economy of combination and manufacturing of components can be significantly improved. With reference to the accompanying drawings, all of these form a part of this specification. However, it should be clearly understood that the accompanying drawings are merely used for the purpose of illustration and description, and are not intended to limit the scope of this specification. It should be further understood that the accompanying drawings are not drawn to scale.

The flowcharts used in this specification show operations implemented by the system according to some embodiments of this specification. It should be clearly understood that the operations in the flowcharts may not be sequentially implemented. On the contrary, the operations can be implemented in a reverse sequence or simultaneously. In addition, one or more other operations can be added to the flowchart, and one or more operations can be removed from the flowchart.

In addition to manners such as biometric identity verification and verification code identity verification, an APP can further identify whether a current terminal device is a commonly used device of a user account, to verify an identity of a user. For example, the APP can identify, based on a device identifier (ID), whether the current terminal device is the commonly used device of the user account.

Specifically, in a process in which the user registers the user account in the APP installed in the terminal device, an APP server collects a device parameter of the terminal device, where the device parameter includes a plurality of software parameters and a plurality of hardware parameters, and processes the device parameter by using a specific tool, to obtain a device ID that can uniquely identify the terminal device. The software parameter is, for example, an APP version, a system version installed in the device, and the like. The hardware parameter is, for example, screen resolution, a media access control (MAC) address, an international mobile equipment identity (IMEI), an international mobile subscriber identity (IMSI), a network standard, a baseband number, and the like. In addition, the device parameter can further include another parameter, for example, a device serial number, Wi-Fi MAC, an operator name, a power-on time, and a user-defined device name. By analogy, the APP server can assign each device that uses the APP a device ID that can uniquely identify the device. The APP server can store a correspondence between a plurality of user accounts and a plurality of device IDs. When the user subsequently uses the APP for the $N^{th}$ time on the terminal device or another device by using the user account, where N is an integer greater than or equal to 1, the APP server can determine, based on a device ID corresponding to the user account, whether the device that uses the APP for the $N^{th}$ time is the commonly used device of the user account. The above-mentioned specific tool is, for example, a device fingerprint software development kit (SDK).

In this specification, the commonly used device of the user account is a device frequently used by the user by using the user account, or a device used by the user by using the user account for a quantity of times exceeding a preset value #A. For example, if a quantity of times the user uses the APP by using a user account 1 on a terminal device 1 is greater than or equal to the preset value #A, the terminal device 1 can be referred to as a commonly used device of the user 1, or the terminal device 1 can be referred to as a commonly used device of the user account 1.

In the above-mentioned example method, the APP server needs to collect enough device parameters to assign each terminal device that uses the APP a device ID that can uniquely identify the terminal device. Currently, many manufacturers of terminal devices impose a large limitation on collection permission of the APP, resulting in insufficient device parameters collected by the APP server. Therefore, it is difficult to assign each terminal device that uses the APP a device ID that can uniquely identify the terminal device. In addition, for a same terminal device, software parameters in device parameters collected by the APP server in different periods change. Therefore, there is a case in which the user uses the APP for two times by using a same terminal device, but it is mistakenly determined by the APP server that different terminal devices are used in the two times; or there is a case in which the user uses the APP for two times by using different terminal devices, but it is mistakenly determined by the APP server that a same terminal device is used in the two times. It can be learned that accuracy of verification is low. In addition, an APP platform needs to purchase a tool that can process the device parameter to generate a device ID, and costs are relatively high.

In view of this, this specification provides an identity verification method and device, and a storage medium. By collecting a parameter related to a device model of a terminal device and with reference to device model distribution information, it can be accurately identified whether the terminal device is a commonly used device of a target account. In the solution process, a large quantity of device parameters of the terminal device do not need to be collected, and the device parameter does not need to be processed into an ID, to reduce costs. Further, when it is identified that the terminal device is the commonly used device, identity verification on a user is skipped, that is, identity verification performed on the user by using a biometric feature, a verification code, or the like can be avoided as much as possible, to consider verification costs and a concern of the user for personal privacy. When it is identified that the terminal device is not the commonly used device and there is a potential security risk, identity verification on a user is triggered, to ensure security of using an APP by the user.

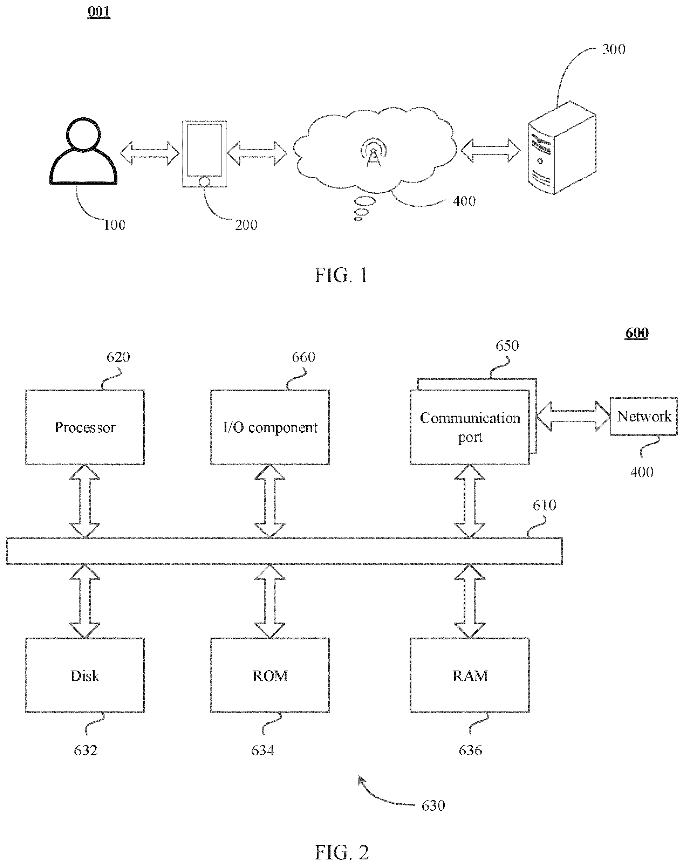

An application scenario of identity verification provided in this specification is described below with reference to FIG. 1.

FIG. 1 is a schematic diagram of an application scenario of identity verification according to an embodiment of this specification. As shown in FIG. 1, the scenario 001 can include a user 100, a terminal device 200, a server 300, and a network 400.

The user 100 can execute a related event by using the terminal device 200. For example, one or more APPs are installed in the terminal device 200, and the one or more APPs can provide the user with a capability of executing the related event. The APP includes but is not limited to a web browser APP, a search APP, a chat APP, a shopping APP, a service APP, a video APP, a financial APP, a payment APP, and the like.

The terminal device 200 can present an interaction interface to the user, so that the user executes some events by using the interaction interface. For example, in response to an operation of the user, the terminal device 200 presents an interaction interface of a shopping APP to the user, and the user can complete a shopping event on the interaction interface of the shopping APP, or the terminal device 200 presents an interaction interface of a payment APP to the user, and the user can complete a payment event on the interaction interface of the payment APP.

The terminal device 200 can include a mobile device, a tablet computer, a notebook computer, a built-in device in a motor vehicle or similar content, or any combination thereof. In some embodiments, the mobile device can include a smart home device, a smart mobile device, a virtual reality device, an augmented reality device or a similar device, or any combination thereof. In some embodiments, the smart home apparatus can include a smart television, a desktop computer, or any combination. In some embodiments, the smart mobile device can include a smartphone, a personal digital assistant, a game device, a navigation device, or any combination thereof. In some embodiments, the virtual reality device or the augmented reality device may include a virtual reality helmet, virtual reality glasses, a virtual reality patch, an augmented reality helmet, augmented reality glasses, an augmented reality patch or similar content, or any combination thereof. For example, the virtual reality device or the augmented reality device may include AR glasses, a head mounted display, or VR. In some embodiments, the built-in apparatus in the motor vehicle can include a vehicle-mounted computer, a vehicle-mounted television, or the like. In some embodiments, the terminal device 200 can be a device with a location technology, configured to locate the terminal device 200.

As shown in FIG. 1, the terminal device 200 can be communicatively connected to the server 300. In some embodiments, the server 300 can further be communicatively connected to another terminal device, and receive data sent by the terminal device. In some embodiments, the terminal device 200 can interact with the server 300 through the network 400, to receive or send a message or the like. The server 300 can be a server that provides various services. For example, the server 300 is a backend server that provides support for the APP installed in the terminal device 200. For example, the server 300 is a backend server that provides support for the payment APP. The server 300 can include a data collection module, a first detection module, a second detection module, and a storage module, and certainly can further include other modules that are not listed one by one. The data collection module can collect a hardware parameter of a terminal device that uses the payment APP. The first detection module can determine a distribution status of a device model of each terminal device that uses the payment APP in device models of all devices that use the payment APP. The second detection module can determine one or more abnormal device models that use the payment APP. The storage module can store a correspondence between a hardware parameter of each device model and each user account, the device model distribution status determined by the first detection module, the abnormal device model determined by the second detection module, and the like. Alternatively, the device model distribution status determined by the first detection module can be stored in the first detection module, and the abnormal device model determined by the second detection module can be stored in the second detection module. The abnormal device model is, for example, a device model of a terminal device used by an abnormal individual or group to use the payment APP. The abnormal individual or group can be an individual or group committing a dark industry criminal act in the payment APP or another APP, or an individual or group that may cause a security problem to use of the APP by an ordinary user. The server 300 can be used as an identity verification device. For example, after receiving an identity verification request sent by the terminal device 200, the server 300 can independently verify the terminal device 200 based on related data such as the locally stored correspondence, the device model distribution status, and the abnormal device model, and send a related indication to the terminal device 200 after obtaining a verification result.

The network 400 is a medium configured to provide a communication connection between the terminal device 200 and the server 300. The network 400 can facilitate exchange of information or data. In some embodiments, the network 400 can be any type of wired or wireless network, or a combination thereof. For example, the network 400 can include a cable network, a wired network, an optical fiber network, a telecommunications network, an intranet, the Internet, a local area network (LAN), a wide area network (WAN), a wireless local area network (WLAN), a metropolitan area network (MAN), a public switched telephone network (PSTN), a Bluetooth network, a ZigBee network, a near field communication (NFC) network, or a similar network. In some embodiments, the network 400 can include one or more network access points. For example, the network 400 can include a wired or wireless network access point, for example, a base station or an Internet switching point. Through the access point, one or more components of the terminal device 200 and the server 300 can be connected to the network 400 to exchange data or information.

It should be understood that quantities of terminal devices, servers 300, and networks 400 in FIG. 1 are merely examples. Based on an implementation requirement, there can be any quantity of terminal devices, servers 300, and networks 400.

FIG. 2 is a diagram of a hardware structure of an electronic device 600 according to an embodiment of this specification. The electronic device 600 can be used as the server 300 in FIG. 1.

As shown in FIG. 2, the electronic device 600 can include at least one storage medium 630 and at least one processor 620. In some embodiments, the electronic device 600 can further include a communication port 650 and an internal communication bus 610. In addition, the electronic device 600 can further include an I/O component 660.

The internal communication bus 610 can be connected to different system components, including the storage medium 630, the processor 620, and the communication port 650.

The I/O component 660 supports input/output between the electronic device 600 and other components.

The communication port 650 is used for data communication between the electronic device 600 and the outside. For example, the communication port 650 can be used for data communication between the electronic device 600 and a network 400. The communication port 650 can be a wired communication port, or can be a wireless communication port.

The storage medium 630 can include a data storage apparatus. The data storage apparatus can be a non-transitory storage medium, or can be a transitory storage medium. For example, the data storage apparatus can include one or more of a disk 632, a read-only storage medium (ROM) 634, or a random access storage medium (RAM) 636. The storage medium 630 further includes at least one instruction set stored in the data storage apparatus. The instruction set can be computer program code. When the electronic device 600 is the server 300, the computer program code can include a program, a routine, an object, a component, a data structure, a process, a module, and the like for performing the identity verification method provided in this specification.

The processor 620 can be communicatively connected to the storage medium 630 and the communication port 650 through the internal communication bus 610. The processor 620 is configured to execute the at least one instruction set. When the electronic device 600 runs as the server 300, the processor 620 reads the at least one instruction set, and performs, based on an indication of the at least one instruction set, the identity verification method provided in this specification.

The processor 620 can be in a form of one or more processors. In some embodiments, the processor 620 can include one or more hardware processors, for example, a microcontroller, a microprocessor, a reduced instruction set computer (RISC), an application-specific integrated circuit (ASIC), an application-specific instruction set processor (ASIP), a central processing unit (CPU), a graphics processing unit (GPU), a physical processing unit (PPU), a microcontroller unit, a digital signal processor (DSP), a field programmable gate array (FPGA), an advanced RISC machine (ARM), a programmable logic device (PLD), any circuit or processor, or the like that can perform one or more functions, or any combination thereof.

To merely describe a problem, only one processor 620 is shown in the electronic device 600 in the accompanying drawings. However, it should be noted that the electronic device 600 in this specification can further include a plurality of processors. Therefore, the operations and/or method steps disclosed in this specification can be performed by one processor or can be performed jointly by a plurality of processors, as described in this specification. For example, if the processor 620 in the electronic device 600 in this specification performs step A and step B, it should be understood as that step A and step B can be jointly or separately performed by two different processors 620 (for example, a first processor performs step A, and a second processor performs step B, or a first processor and a second processor jointly perform steps A and B).

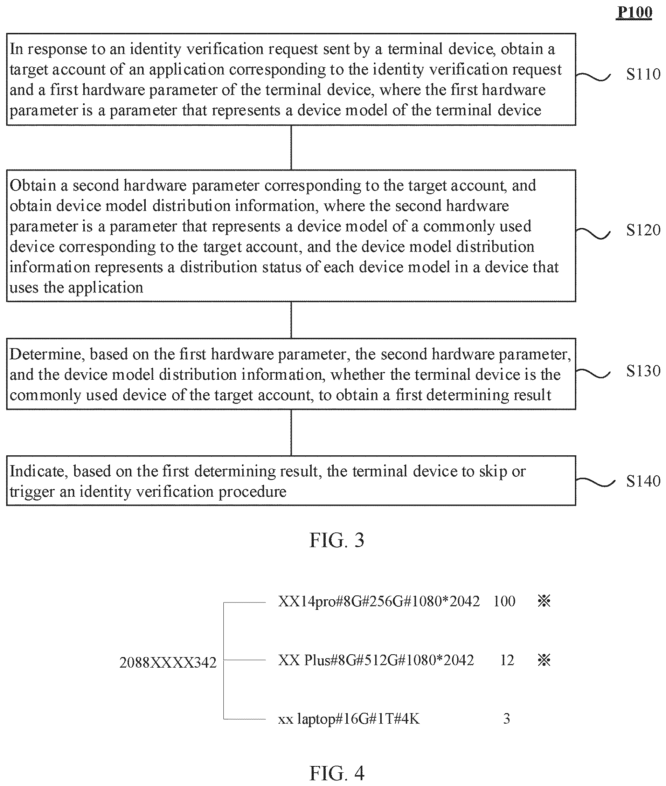

FIG. 3 is a flowchart of an identity verification method P100 according to an embodiment of this specification. As described above, the electronic device 600 can perform the method P100 in this specification. Specifically, the processor 620 in the electronic device 600 can read an instruction set stored in a local storage medium of the processor 620, and then perform the method P100 in this specification based on a stipulation of the instruction set.

As shown in FIG. 3, the identity verification method P100 can include the following steps.

S 110: In response to an identity verification request sent by a terminal device, obtain a target account of an APP corresponding to the identity verification request and a first hardware parameter of the terminal device, where the first hardware parameter is a parameter that represents a device model of the terminal device.

The target account is a user account currently used by a user to use the APP. The user can log in to the APP by using the target account, or the user can initiate a related operation in the APP by using the target account. For example, for a payment APP, the target account can be a mobile phone number of the user, a mailbox, a user ID generated by the payment APP for the user, or the like.

When the user uses the APP by using the target account on the terminal device to perform some operations requiring identity verification, the terminal device sends the identity verification request. After receiving the identity verification request, in response to the identity verification request, the electronic device 600 used as the server 300 of the APP obtains the target account of the APP corresponding to the identity verification request and the first hardware parameter of the terminal device. The target account of the APP corresponding to the identity verification request can be understood as a user account used to initiate the identity verification request in the APP. The operation requiring identity verification is, for example, a fund-related operation, specifically, an operation such as a transfer or a transaction initiated in the payment APP.

For example, a client of the payment APP is installed in a terminal device 1. The user can log in to the client of the payment APP by using a mobile phone number, and perform an operation in an interaction interface of the client of the payment APP to initiate a transfer. In this case, the client of the payment APP needs to check an identity of the user, to determine whether the current transfer operation is initiated by the user. Therefore, the client of the payment APP initiates an identity verification request. Further, a server of the payment APP receives the identity verification request sent by the terminal device 1, so that the server of the payment APP obtains the mobile phone number and a first hardware parameter of the terminal device 1 in response to the identity verification request.

The electronic device 600 can obtain the target account and the first hardware parameter in a plurality of manners. The following uses two manners as examples.

Manner 1: The identity verification request includes the target account. In this case, the electronic device 600 can parse the identity verification request to obtain the target account corresponding to the identity verification request. Further, after determining to verify the identity of the user by using the method P100, the electronic device 600 can request to obtain the first hardware parameter from the terminal device, so that the terminal device sends the first hardware parameter to the electronic device 600.

For example, the identity verification request includes the mobile phone number, and the electronic device 600 can obtain the mobile phone number from the identity verification request. After the electronic device 600 determines to use the method P100, the electronic device 600 requests to obtain the first hardware parameter of the terminal device 1 from the terminal device 1.

Manner 2: The identity verification request can include the target account and the first hardware parameter. In this case, the electronic device 600 can parse the identity verification request to obtain the target account and the first hardware parameter.

For example, the identity verification request includes the mobile phone number and the first hardware parameter, and the electronic device 600 obtains the mobile phone number and the first hardware parameter from the identity verification request.

The first hardware parameter is a parameter that represents a device model of the terminal device, or the first hardware parameter is a parameter related to a device model of the terminal device. The first hardware parameter can describe or represent performance, a specification, a size, and the like of the terminal device. The first hardware parameter can be broadly understood as a device parameter that is not changed in a process of using the terminal device by the user.

In some embodiments, the first hardware parameter includes but is not limited to at least one of the following: a model name, a memory capacity, a storage capacity, screen resolution, a device appearance size, a device weight, a quantity of cores in a central processing unit (CPU), a CPU frequency, and the like. The model name is used to describe a brand name of the terminal device or a combination of a brand name and a version. The version is, for example, a generation, a professional version, or an enhanced version. The model name is specifically, for example, XX 14Pro. The memory capacity is used to describe a size of a running memory (RAM) of the terminal device. For example, the memory capacity can be 4G, 8G, or the like. The storage capacity is used to describe a size of a storage memory (ROM) of the terminal device. For example, the storage capacity can be 256G, 512G, or the like. The screen resolution is used to describe a quantity of pixels that can be carried on a display screen of the terminal device. For example, the screen resolution can be 1080*2042, 1920* 1080, or the like. If the first hardware parameter includes the following four items: the model name, the memory capacity, the storage capacity, and the screen resolution, based on the above-mentioned example, the device model of the terminal device represented by the first hardware parameter can be XX 14Pro#8G#256G#1080*2042.

S120: Obtain a second hardware parameter corresponding to the target account, and obtain device model distribution information, where the second hardware parameter is a parameter that represents a device model of a commonly used device corresponding to the target account, and the device model distribution information represents a distribution status of each device model in a device that uses the application.

Each time the user uses the APP by using the target account, an APP platform (for example, a client or a server) collects a hardware parameter of a device used by using the target account, and stores a correspondence between the collected hardware parameter and the target account. In addition, the APP platform can further record a quantity of times each device is used by using the target account, and mark a device used for a quantity of times exceeding a preset value #A as a commonly used device of the target account. The electronic device 600 obtains the second hardware parameter, that is, obtains the parameter that represents the device model of the commonly used device corresponding to the target account. For a specific parameter type of the second hardware parameter, refer to the example of the first hardware parameter. Details are not described.

For example, as shown in FIG. 4, the APP server can store a correspondence between the target account and each of a device model and a quantity of use times. The target account is 2088XXXX342, the user uses the payment APP by using 2088XXXX342 on a mobile phone 1, a mobile phone 2, and a computer, and the user uses the payment APP by using 2088XXXX342 on the mobile phone 1 for 100 times, uses the payment APP by using 2088XXXX342 on the mobile phone 2 for 12 times, and uses the payment APP by using 2088XXXX342 on the computer for three times. The APP server obtains, based on a collected hardware parameter of the mobile phone 1, that a device model of the mobile phone 1 is XX 14Pro#8G#256G#1080*2042, obtains, based on a collected hardware parameter of the mobile phone 2, that a device model of the mobile phone 2 is XX 14Plus#8G#512G#1080*2042, and obtains, based on a collected hardware parameter of the computer, that a device model of the computer is xx laptop#16G#1 TG#4K. If the preset value #A is 10, a quantity of times the mobile phone 1 is used and a quantity of times the mobile phone 2 is used are greater than the preset value #A. Therefore, the mobile phone 1 and the mobile phone 2 are commonly used devices of 2088XXXX342, and the APP platform can label device models of the commonly used devices by using ※ . Therefore, the electronic device 600 can obtain a second hardware parameter from the correspondence in the example in FIG. 4. The second hardware parameter includes parameters involved in XX 14Pro#8G#256G#1080*2042 and XX 14Plus#8G#512G#1080*2042.

The device model distribution information describes a distribution status of each device model in all devices that use the APP in a historical time period. The device model distribution information can have a plurality of expression forms. The expression form of the device model distribution information is not limited in this specification.

In an example, the device model distribution information can include device quantities respectively corresponding to a plurality of device models. For example, the device model distribution information can be shown in Table 1. A device quantity corresponding to a model 1 is 36000, which indicates that 36000 devices corresponding to the model 1 use the APP in the historical time period. A meaning of a device quantity corresponding to another device model can be obtained by analogy.

Table 1

| Device model | Device quantity |
|---|---|
| Model 1 | 36000 |
| Model 2 | 18000 |
| Model 3 | 54000 |
| ... | ... |

The device model distribution information can be obtained through statistics collection in a plurality of manners. The following uses three examples for description.

Example 1: For the model 1, when a device corresponding to the model 1 uses the APP for the first time, a first detection module counts the device quantity corresponding to the model 1 as 1. When a device corresponding to the model 1 uses the APP for the second time, the first detection module determines whether a user account used to use the APP for the second time is the same as a user account used to use the APP for the first time. If the user account used to use the APP for the second time is the same as the user account used to use the APP for the first time, the device quantity corresponding to the model 1 is unchanged. If the user account used to use the APP for the second time is different from the user account used to use the APP for the first time, the first detection module counts the device quantity corresponding to the model 1 as 2. By analogy, the first detection module obtains the device quantity corresponding to the model 1 and a device quantity corresponding to another model.

Example 2: For the model 1, each time a device corresponding to the model 1 uses the APP, a first detection module increases the device quantity corresponding to the model 1 by 1. By analogy, the first detection module obtains the device quantity corresponding to the model 1 and a device quantity corresponding to another model.

Example 3: For the model 1, when a device corresponding to the model 1 uses the APP for the first time, a first detection module counts the device quantity corresponding to the model 1 as 1. When a device corresponding to the model 1 uses the APP for the second time, the first detection module determines whether a user account used to use the APP for the second time is associated with a user account used to use the APP for the first time. If the user account used to use the APP for the second time is associated with the user account used to use the APP for the first time, the device quantity corresponding to the model 1 is unchanged. If the user account used to use the APP for the second time is not associated with the user account used to use the APP for the first time, the first detection module counts the device quantity corresponding to the model 1 as 2. By analogy, the first detection module obtains the device quantity corresponding to the model 1 and a device quantity corresponding to another model. The association between the user account used to use the APP for the second time and the user account used to use the APP for the first time can be understood as follows: The user account used to use the APP for the second time and the user account used to use the APP for the first time belong to a same user. For example, the user account used to use the APP for the first time is a mobile phone number of Wang XX, and the user account used to use the APP for the second time is a mailbox number of Wang XX. The first detection module can obtain a correspondence between a user and a user account. Therefore, the first detection module can determine, based on the correspondence, user accounts that belong to a same user.

In another example, the device model distribution information can include usage rates corresponding to a plurality of device models. The usage rate corresponding to each device model can be a percentage of a quantity of devices that correspond to the device model and that use the APP in the historical time period in a quantity of all devices that use the APP in the historical time period. For example, the device model distribution information can be shown in Table 2. A usage rate corresponding to a model 1 is 0.2%, which means that in all the devices that use the APP in the historical time period, a device percentage of the model 1 is 0.2%. A meaning of a usage rate corresponding to another device model can be obtained by analogy.

**Table 2**

| Device model | Usage rate |
|---|---|
| Model 1 | 0.2% |
| Model 2 | 0.1% |
| Model 3 | 0.3% |
| ... | ... |

After the device model distribution information in the example in Table 1 is obtained in the above-mentioned manner, the device model distribution information in Table 2 can be obtained through calculation based on device quantities corresponding to different models and a total device quantity corresponding to all models in Table 1.

The device model distribution information can be further periodically or irregularly updated. For example, when a new user account is used to use the APP or an old user account is used to use the APP on a new device, the device model distribution information can be updated. For example, a device quantity or a usage rate of an existing device model in the device model distribution information is updated, or a device quantity or a usage rate of a new device model is added to the device model distribution information.

In the method P100, the hardware parameter collected by the electronic device 600 is a basic parameter of the device, and is basically not limited by APP collection permission set by a manufacturer of the terminal device. In addition, the hardware parameter is basically unchanged in a process in which the user uses the terminal device, and is relatively stable. Therefore, in the method P100, the basic parameter of the device can be used in a verification process of the device, and no privacy of the user is involved. This plays a pre-verification role before it is determined whether identity verification needs to be performed on the user.

S130: Determine, based on the first hardware parameter, the second hardware parameter, and the device model distribution information, whether the terminal device is the commonly used device of the target account, to obtain a first determining result.

The electronic device 600 can obtain the first determining result in a plurality of manners. The following uses two manners as examples.

Manner 1

The electronic device 600 obtains the first determining result based on the first hardware parameter, the second hardware parameter, and the device model distribution information.

In some embodiments, the electronic device 600 matches the first hardware parameter with the second hardware parameter, to obtain a matching result. If the first hardware parameter is exactly the same as the second hardware parameter, it is determined that the matching result is "consistent". If one parameter in the first hardware parameter is different from that in the second hardware parameter, it is determined that the matching result is "inconsistent".

If the matching result is "consistent", it is further determined, based on the device model distribution information, whether the terminal device is the commonly used device of the target account.

If the matching result is "inconsistent", the electronic device 600 can determine that the terminal device is not the commonly used device of the target account. In this way, the electronic device 600 can simply and quickly obtain a verification result of the terminal device based on a matching status between the first hardware parameter and the second hardware parameter. If matching between the hardware parameters fails, the electronic device 600 can directly determine that the verification result of the terminal device is a failure, and does not need to perform another redundant operation, to avoid wasting computing resources of the electronic device 600.

The following describes a case in which the matching result is "consistent".

In some embodiments, the electronic device 600 determines, based on the device model distribution information, a confidence level indicating that the terminal device and the commonly used device are a same device, and determines the first determining result based on the determined confidence level.

The electronic device 600 can determine a usage rate corresponding to the device model of the terminal device based on the device model distribution information. For example, the electronic device 600 can obtain the usage rate corresponding to the device model of the terminal device through calculation based on the device model distribution information shown in Table 1. For another example, the electronic device 600 can obtain the usage rate corresponding to the device model of the terminal device through query from the device model distribution information shown in Table 2.

After determining the usage rate corresponding to the device model of the terminal device, the electronic device 600 can determine, based on the following formula, the confidence level indicating that the terminal device and the commonly used device are a same device:

$$P = 1 - X,$$

where
P represents the confidence level, and X represents the usage rate corresponding to the device model of the terminal device.

If the electronic device 600 determines that the confidence level is greater than or equal to a preset value #B, it is determined that the terminal device is the commonly used device; or if the electronic device 600 determines that the confidence level is less than a preset value #B, it is determined that the terminal device is not the commonly used device.

In the manner 1, even if there are 100 same device models in the devices that use the APP, if there are 1000000 devices that use the APP, the usage rate of the device model is 0.0001. If a dark industry group makes a credential stuffing attack on the APP by using a device of the same device model, a probability of being hit is 0.0001, and the confidence level can reach 1-0.0001=99.99%. It can be learned that security can be ensured to some extent.

Manner 2

The electronic device 600 obtains the first determining result based on the first hardware parameter, the second hardware parameter, the device model distribution information, and an abnormal device model list.

In some embodiments, the electronic device 600 can obtain a second determining result based on the first hardware parameter and the abnormal device model list, and the second determining result can indicate whether the device model of the terminal device falls within the abnormal device model list. Further, the electronic device 600 can obtain the first determining result based on the first hardware parameter, the second hardware parameter, the device model distribution information, and the second determining result.

Before determining the first determining result, the electronic device 600 needs to obtain the abnormal device model list.

For example, the electronic device 600 obtains event information of one or more abnormal events in the APP, determines an abnormal device model corresponding to the one or more abnormal events based on the event information of the one or more abnormal events, where the abnormal device model is a device model of a device that executes the generated abnormal event, and determines a distribution status of the abnormal device model. The distribution status of the abnormal device model is, for example, an occupation rate corresponding to the abnormal device model, and the occupation rate corresponding to the abnormal device model is, for example, a percentage of an abnormal device corresponding to the abnormal device model in all abnormal devices in the APP, or a percentage of an abnormal device corresponding to the abnormal device model in all devices in the APP. Specifically, if all the devices that use the APP are 1000000, and there are 100 abnormal devices corresponding to an abnormal device model 1 and 1000 abnormal devices corresponding to all abnormal device models, an occupation rate of the abnormal device model 1 can be 100/1000000, or can be 100/1000, where "/" represents "÷". The electronic device 600 determines, based on an occupation rate of each abnormal device model, whether to add the abnormal device model to the abnormal device model list. For example, the electronic device 600 adds an abnormal device model whose occupation rate is greater than or equal to a preset value #C to the abnormal device model list.

It can be understood that the abnormal event is an event that is executed by a user and whose attribute value or attribute value combination that describes the event is abnormal; or is an event executed by a wrongdoer. In the transaction field, the abnormal event is, for example, a risky transaction. In the network security field, the abnormal event is, for example, a network attack event.

It should be noted that the abnormal device model list is a manner of presenting one or more abnormal device models. The one or more abnormal device models can be presented in other manners, for example, presented in a set. The other presentation manners are not listed one by one.

The abnormal device model list includes one or more abnormal device models. Each abnormal device model can be represented by using a hardware parameter. For a specific parameter type that represents the hardware parameter of the abnormal device model, refer to the example of the first hardware parameter. Details are not described.

In the manner 2, even if there are 100 same device models in the devices that use the APP, if there are 1000000 devices that use the APP, the usage rate of the device model is 0.0001. If a dark industry group makes a credential stuffing attack on the APP by using a device of the same device model, a probability of being hit is 0.0001, and the confidence level can reach 1-0.0001=99.99%. By using the abnormal device model list, a risk of 0.0001 can be avoided as much as possible, and security of using the APP by the user can be further ensured.

A process of obtaining, by the electronic device 600, the first determining result in the manner 2 can be implemented by using a plurality of types of execution logic. The following uses three examples for description.

Execution logic 1

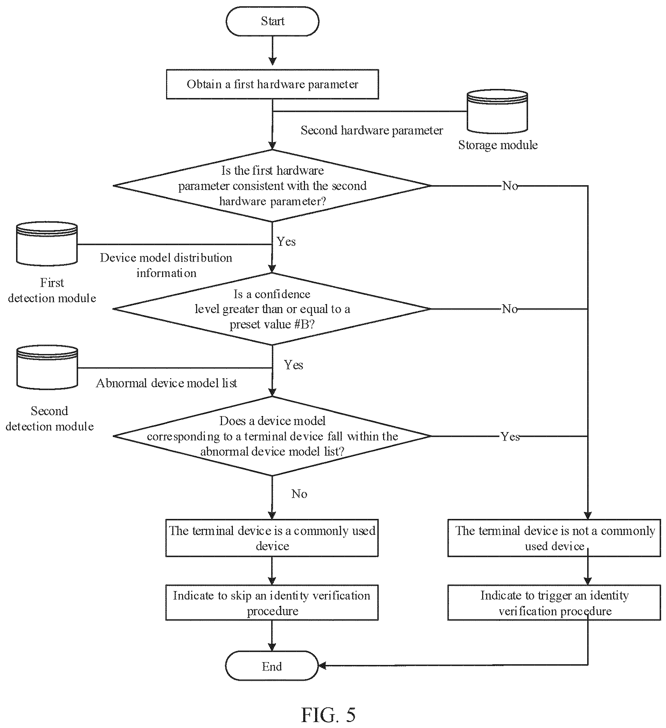

As shown in FIG. 5, the electronic device 600 can obtain the second hardware parameter from a storage module, obtain the device model distribution information from the first detection module, and obtain the abnormal device model list from a second detection module.

After the electronic device 600 obtains the first hardware parameter and the second hardware parameter, if it is determined that matching between the first hardware parameter and the second hardware parameter is "inconsistent", it is determined that the terminal device is not the commonly used device of the target account. If it is determined that matching between the first hardware parameter and the second hardware parameter is "consistent", it is further determined, based on the device model distribution information, whether a confidence level indicating that the terminal device and the commonly used device of the target account are a same device is greater than or equal to a preset value #B. If it is determined that the confidence level is less than the preset value #B, it is determined that the terminal device is not the commonly used device of the target account. If it is determined that the confidence level is greater than or equal to the preset value #B, it is further determined, based on the abnormal device model list, whether the device model corresponding to the terminal device falls within the abnormal device model list. If it is determined that the device model corresponding to the terminal device falls within the abnormal device model list, it is determined that the terminal device is not the commonly used device of the target account. If it is determined that the device model corresponding to the terminal device falls outside the abnormal device model list, it is determined that the terminal device is the commonly used device of the target account.

Execution logic 2

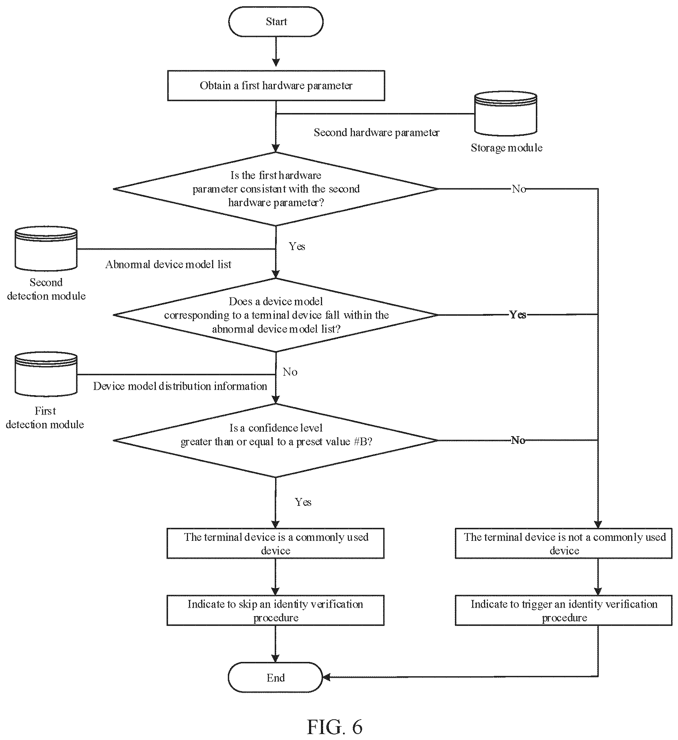

As shown in FIG. 6, a difference from the execution logic in the example in FIG. 5 is that after determining that matching between the first hardware parameter and the second hardware parameter is "consistent", the electronic device 600 first determines, based on the abnormal model list, whether the device model corresponding to the terminal device falls within the abnormal device model list. If it is determined that the device model corresponding to the terminal device falls within the abnormal device model list, it is determined that the terminal device is not the commonly used device of the target account. If it is determined that the device model corresponding to the terminal device falls outside the abnormal device model list, it is further determined, based on the device model distribution information, whether a confidence level indicating that the terminal device and the commonly used device of the target account are a same device is greater than or equal to a preset value #B. If it is determined that the confidence level is less than the preset value #B, the terminal device is not the commonly used device of the target account. If it is determined that the confidence level is greater than or equal to the preset value #B, it is determined that the terminal device is the commonly used device of the target account.

In the execution logic 2, after it is determined that matching between the first hardware parameter and the second hardware parameter is "consistent", it is first determined whether the device model corresponding to the terminal device falls within the abnormal device model list, to more quickly obtain the verification result of the terminal device. Therefore, if the device model corresponding to the terminal device falls within the abnormal device model list, it is unnecessary to determine the confidence level, to avoid wasting computing resources of the electronic device 600 as much as possible.

Execution logic 3

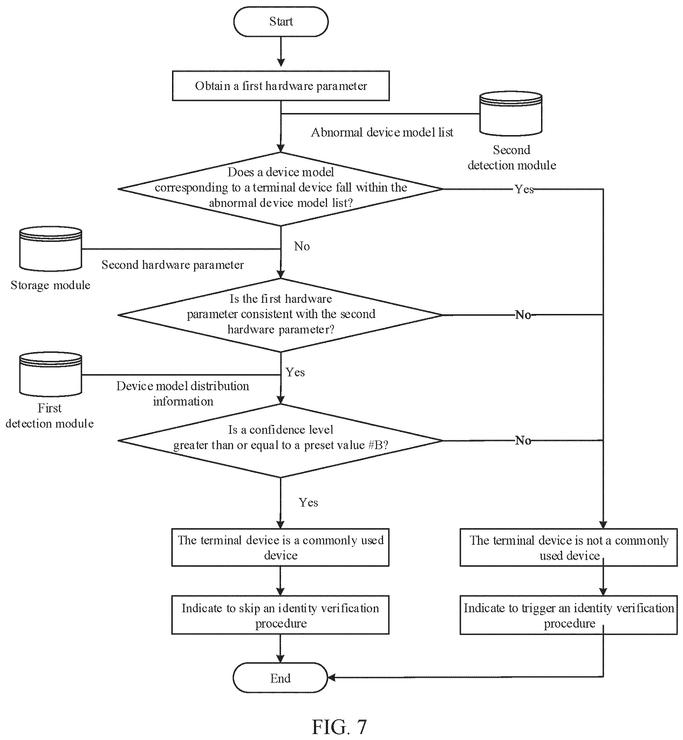

As shown in FIG. 7, a difference from the execution logic in the example in FIG. 5 is that after obtaining the first hardware parameter, the electronic device 600 first determines, based on the abnormal device model list, whether the device model corresponding to the terminal device falls within the abnormal device model list, when determining that the device model corresponding to the terminal device falls outside the abnormal device model list, further determines whether matching between the first hardware parameter and the second hardware parameter is "consistent", and when the matching is "consistent", continues to determine, based on the device model distribution information, whether a confidence level indicating that the terminal device and the commonly used device of the target account are a same device is greater than or equal to a preset value #B. If it is determined that the confidence level is less than the preset value #B, it is determined that the terminal device is not the commonly used device of the target account. If it is determined that the confidence level is greater than or equal to the preset value #B, it is determined that the terminal device is the commonly used device of the target account. It can be understood that in the execution logic 3, a determining manner of determining, based on a matching status between the first hardware parameter and the second hardware parameter and a result of determining whether the device model of the terminal device falls within the abnormal device model list, that the terminal device is not the commonly used device is similar to content described in the execution logic 1/2. Details are not described.

In the execution logic 3, it is determined, at the beginning, whether the device model corresponding to the terminal device falls within the abnormal device model list. Therefore, if the device model corresponding to the terminal device falls within the abnormal device model list, it is unnecessary to perform subsequent determining, to further reduce waste of computing resources of the electronic device 600.

S140: Indicate, based on the first determining result, the terminal device to skip or trigger an identity verification procedure.

In some embodiments, if the first determining result indicates that the terminal device is the commonly used device, the electronic device 600 indicates the terminal device to skip the identity verification procedure. That is, when determining that the terminal device is the commonly used device, the electronic device 600 determines that no identity verification needs to be performed on the user, that is, indicates the terminal device to skip the identity verification procedure. The identity verification procedure can be a procedure used to perform identity verification on the user, for example, identity verification can be performed through biometric identity verification or by using a verification code. If the identity verification request in S 110 is specific to a transfer service in the payment APP, after receiving the indication for skipping the identity verification procedure, the terminal device no longer displays an identity verification indication about the user in the interaction interface of the payment APP, that is, the user can complete the transfer service without entering verification information such as a fingerprint or a verification code.

In some embodiments, if the first determining result indicates that the terminal device is not the commonly used device, the electronic device 600 indicates the terminal device to trigger the identity verification procedure. That is, when determining that the terminal device is not the commonly used device, the electronic device 600 further needs to perform identity verification on the user, to ensure security of using the APP by the user. After receiving the indication for triggering the identity verification procedure, the terminal device can perform identity verification on the user through biometric identity verification, by using a verification code, or in another manner. For example, in the interaction interface of the payment APP in the terminal device, the user is indicated to enter a fingerprint or a verification code, or the user is indicated to perform facial recognition. After the user completes a related operation based on the indication in the interaction interface, the identity verification procedure ends. For example, if the identity verification request in S 110 is specific to a transfer service in the payment APP, the user completes a related operation based on an indication in the interaction interface. If the identity verification succeeds, the transfer service is completed. If the identity verification fails, the transfer service is blocked by the payment APP, and the transfer service cannot be completed.

In conclusion, according to the identity verification method and device, and the storage medium provided in this specification, after receiving the identity verification request sent by the terminal device, the target account corresponding to the identity verification request and the first hardware parameter of the terminal device can be obtained, the second hardware parameter corresponding to the target account and the device model distribution information that represents the distribution status of each device model in the device that uses the APP can be obtained, then it can be determined, based on the first hardware parameter, the second hardware parameter, and the device model distribution information, whether the terminal device is the commonly used device of the target account, and then whether the terminal device needs to enable the identity verification procedure for the user is indicated based on the determining result. It can be learned that in the solution provided in this specification, by collecting a parameter related to the device model of the terminal device and with reference to the device model distribution information, it can be accurately identified whether the terminal device is the commonly used device of the target account. When it is identified that the terminal device is the commonly used device, identity verification on the user can be skipped, that is, identity verification performed on the user in a manner such as using a biometric feature or a verification code can be reduced, to reduce verification costs. In addition, in the solution, a concern of the user for privacy is considered, to avoid performing identity verification on the user by using the biometric feature of the user as much as possible. When it is identified that the terminal device is not the commonly used device, identity verification on the user is triggered, that is, when verification on the terminal device fails and there is a specific potential security risk, identity verification on the user is selected, to ensure security of using the APP by the user.

According to another aspect of this specification, a non-transitory storage medium is provided, and stores at least one group of executable instructions for performing identity verification. When the executable instructions are executed by a processor, the executable instructions instruct the processor to implement the steps of the method P100 described in this specification. In some possible implementations, various aspects of this specification can be further implemented in a form of a program product, including program code. When the program product runs on the electronic device 600, the program code is used to enable the electronic device 600 to perform the steps of the method P100 described in this specification. The program product configured to implement the above-mentioned method can use a portable compact disc read-only memory (CD-ROM) that includes program code, and can run on the electronic device 600. However, the program product in this specification is not limited thereto. In this specification, the readable storage medium can be any tangible medium that includes or stores a program, and the program can be used by or in combination with an instruction execution system. The program product can use any combination of one or more readable media. The readable medium can be a readable signal medium or a readable storage medium. For example, the readable storage medium can be but is not limited to an electrical, magnetic, optical, electromagnetic, infrared, or semiconductor system, apparatus, or device, or any combination thereof. More specific examples of the readable storage medium include an electrical connection including one or more conducting wires, a portable disk, a hard disk, a random access memory (RAM), a read-only memory (ROM), an erasable programmable read-only memory (EPROM) or a flash memory, an optical fiber, a portable compact disc read-only memory (CD-ROM), an optical storage device, a magnetic storage device, or any proper combination thereof. The computer-readable storage medium can include a data signal propagated in a baseband or as part of a carrier, and carries readable program code. The propagated data signal can be in a plurality of forms, including but not limited to an electromagnetic signal, an optical signal, or any proper combination thereof. The readable storage medium can alternatively be any readable medium other than the readable storage medium, and the readable medium can send, propagate, or transmit a program used by or in combination with an instruction execution system, apparatus, or device. The program code included in the readable storage medium can be transmitted by using any proper medium, including but not limited to a wireless medium, a wired medium, optical cable, an RF medium, or any proper combination thereof. Program code for performing an operation of this specification can be written in any combination of one or more program design languages. The program design language includes an object-oriented program design language, for example, Java or C++, and further includes a conventional procedural program design language, for example, "C" language, or a similar program design language. The program code can be completely executed on the electronic device 600, partially executed on the electronic device 600, executed as an independent software package, partially executed on the electronic device 600 and partially executed on a remote computing device, or completely executed on a remote computing device.

In the technical solutions provided in this specification, collection and use of the related hardware parameter of the device comply with related laws and regulations, and do not violate public order and good morals.

Specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence or consecutive sequence to achieve the desired results. In some implementations, multitasking and parallel processing are possible or may be advantageous.

In conclusion, after reading the detailed disclosure, a person skilled in the art can understand that the detailed disclosure can be presented only by using an example, and can impose no limitation. Although it is not explicitly stated herein, a person skilled in the art can understand that the requirements of this specification include various proper changes, improvements, and modifications to the embodiments. These changes, improvements, and modifications are intended to be provided in this specification, and fall within the spirit and scope of the example embodiments of this specification.

**EXAMPLES**

1. An identity verification method, comprising:

in response to an identity verification request sent by a terminal device, obtaining a target account of an application corresponding to the identity verification request and a first hardware parameter of the terminal device, wherein the first hardware parameter is a parameter that represents a device model of the terminal device;

obtaining a second hardware parameter corresponding to the target account, and obtaining device model distribution information, wherein the second hardware parameter is a parameter that represents a device model of a commonly used device corresponding to the target account, and the device model distribution information represents a distribution status of each device model in a device that uses the application;

determining, based on the first hardware parameter, the second hardware parameter, and the device model distribution information, whether the terminal device is the commonly used device of the target account, to obtain a first determining result; and

indicating, based on the first determining result, the terminal device to skip or trigger an identity verification procedure.

2. The method according to example 1, wherein the determining, based on the first hardware parameter, the second hardware parameter, and the device model distribution information, whether the terminal device is the commonly used device of the target account comprises:

matching the first hardware parameter with the second hardware parameter, to obtain a matching result; and

if the matching result is "consistent", determining, based on the device model distribution information, whether the terminal device is the commonly used device.

3. The method according to example 2, wherein the determining, based on the device model distribution information, whether the terminal device is the commonly used device comprises:

determining, based on the device model distribution information, a confidence level indicating that the terminal device and the commonly used device are a same device; and

determining, based on the confidence level, whether the terminal device is the commonly used device.

4. The method according to example 3, wherein the determining, based on the device model distribution information, a confidence level indicating that the terminal device and the commonly used device are a same device comprises:

determining a usage rate corresponding to the device model of the terminal device based on the device model distribution information, wherein the usage rate represents a percentage of a first device quantity in a second device quantity, the first device quantity is a quantity of devices that correspond to the device model of the terminal device and that use the application in a historical time period, and the second device quantity is a quantity of all devices that use the application in the historical time period; and

determining the confidence level based on the usage rate and the following formula:

$$P = 1 - X,$$

wherein
P represents the confidence level, and X represents the usage rate.

5. The method according to example 3, wherein the determining, based on the confidence level, whether the terminal device is the commonly used device comprises:

if the confidence level is greater than or equal to a preset value, determining that the terminal device is the commonly used device; or
if the confidence level is less than a preset value, determining that the terminal device is not the commonly used device.

6. The method according to example 2, wherein the method further comprises:
if the matching result is "inconsistent", determining that the terminal device is not the commonly used device.

7. The method according to example 1, wherein the method further comprises:

determining whether the device model of the terminal device falls within an abnormal device model list, to obtain a second determining result; and
the determining, based on the first hardware parameter, the second hardware parameter, and the device model distribution information, whether the terminal device is the commonly used device of the target account comprises:
determining, based on the first hardware parameter, the second hardware parameter, the device model distribution information, and the second determining result, whether the terminal device is the commonly used device.

8. The method according to example 7, wherein the determining, based on the first hardware parameter, the second hardware parameter, the device model distribution information, and the second determining result, whether the terminal device is the commonly used device comprises:

if the second determining result indicates that the device model of the terminal device falls outside the abnormal device model list, determining, based on the first hardware parameter, the second hardware parameter, and the device model distribution information, whether the terminal device is the commonly used device; or
if the second determining result indicates that the device model of the terminal device falls within the abnormal device model list, determining that the terminal device is not the commonly used device.

9. The method according to example 7, wherein the determining, based on the first hardware parameter, the second hardware parameter, the usage rate, and the second result, whether the terminal device is the commonly used device comprises:

determining, based on the first hardware parameter, the second hardware parameter, and the device model distribution information, a confidence level indicating that the terminal device and the commonly used device are a same device; and
if the confidence level is greater than or equal to a preset value, determining, based on the second determining result, whether the terminal device is the commonly used device.

10. The method according to example 9, wherein the determining, based on the second determining result, whether the terminal device is the commonly used device comprises:

if the second determining result indicates that the device model of the terminal device falls outside the abnormal device model list, determining that the terminal device is the commonly used device; or
if the second determining result indicates that the device model of the terminal device falls within the abnormal device model list, determining that the terminal device is not the commonly used device.

11. The method according to example 1, wherein the first hardware parameter comprises at least one of the following:
a model name, a memory capacity, a storage capacity, and screen resolution.
12. The method according to example 1, wherein the indicating, based on the first determining result, the terminal device to skip or trigger an identity verification procedure comprises:

if the first determining result indicates that the terminal device is the commonly used device, indicating the terminal device to skip the identity verification procedure; or

if the first determining result indicates that the terminal device is not the commonly used device, indicating the terminal device to trigger the identity verification procedure.

13. An electronic device, comprising:

at least one storage medium that stores at least one instruction set used to perform identity verification; and

at least one processor that is communicatively connected to the at least one storage medium, wherein the at least one processor reads the at least one instruction set when running, and performs the following operations based on an indication of the at least one instruction set:

in response to an identity verification request sent by a terminal device, obtaining a target account of an application corresponding to the identity verification request and a first hardware parameter of the terminal device, wherein the first hardware parameter is a parameter that represents a device model of the terminal device;

obtaining a second hardware parameter corresponding to the target account, and obtaining device model distribution information, wherein the second hardware parameter is a parameter that represents a device model of a commonly used device corresponding to the target account, and the device model distribution information represents a distribution status of each device model in a device that uses the application;

determining, based on the first hardware parameter, the second hardware parameter, and the device model distribution information, whether the terminal device is the commonly used device of the target account, to obtain a first determining result; and

indicating, based on the first determining result, the terminal device to skip or trigger an identity verification procedure.

14. The electronic device according to example 13, wherein to determine whether the terminal device is the commonly used device of the target account, the at least one processor performs the following operations:

matching the first hardware parameter with the second hardware parameter, to obtain a matching result; and

if the matching result is "consistent", determining, based on the device model distribution information, whether the terminal device is the commonly used device.

15. The electronic device according to example 14, wherein to determine whether the terminal device is the commonly used device, the at least one processor performs the following operations:

determining, based on the device model distribution information, a confidence level indicating that the terminal device and the commonly used device are a same device; and

determining, based on the confidence level, whether the terminal device is the commonly used device.

16. The electronic device according to example 15, wherein to determine the confidence level indicating that the terminal device and the commonly used device are a same device, the at least one processor performs the following operations:

determining a usage rate corresponding to the device model of the terminal device based on the device model distribution information, wherein the usage rate represents a percentage of a first device quantity in a second device quantity, the first device quantity is a quantity of devices that correspond to the device model of the terminal device and that use the application in a historical time period, and the second device quantity is a quantity of all devices that use the application in the historical time period; and

determining the confidence level based on the usage rate and the following formula:

$$P = 1 - X,$$

wherein
P represents the confidence level, and X represents the usage rate.

17. The electronic device according to example 15, wherein to determine whether the terminal device is the commonly used device, the at least one processor performs the following operations:

if the confidence level is greater than or equal to a preset value, determining that the terminal device is the commonly used device; or

if the confidence level is less than a preset value, determining that the terminal device is not the commonly used device.

18. The electronic device according to example 14, wherein the at least one processor performs the following operation:
if the matching result is "inconsistent", determining that the terminal device is not the commonly used device.

19. The electronic device according to example 13, wherein to determine whether the terminal device is the commonly used device, the at least one processor performs the following operations:

determining whether the device model of the terminal device falls within an abnormal device model list, to obtain a second determining result; and
determining, based on the first hardware parameter, the second hardware parameter, the device model distribution information, and the second determining result, whether the terminal device is the commonly used device.

20. A computer-readable non-transitory storage medium, wherein the computer-readable non-transitory storage medium stores at least one instruction set, and when the at least one instruction set is executed by at least one processor, the method according to any one of examples 1 to 12 is implemented.

**Claims**

1. An identity verification method (P 100), comprising:

in response to an identity verification request sent by a terminal device, obtaining (S110) a target account of an application corresponding to the identity verification request and a first hardware parameter of the terminal device, wherein the first hardware parameter is a parameter that represents a device model of the terminal device;
obtaining (S120) a second hardware parameter corresponding to the target account, and obtaining device model distribution information, wherein the second hardware parameter is a parameter that represents a device model of a commonly used device corresponding to the target account, and the device model distribution information represents a distribution status of each device model in a device that uses the application;
determining (S130), based on the first hardware parameter, the second hardware parameter, and the device model distribution information, whether the terminal device is the commonly used device of the target account, to obtain a first determining result; and
indicating (S140), based on the first determining result, the terminal device to skip or trigger an identity verification procedure.

2. The method according to claim 1, wherein determining (S130), based on the first hardware parameter, the second hardware parameter, and the device model distribution information, whether the terminal device is the commonly used device of the target account comprises:

matching the first hardware parameter with the second hardware parameter, to obtain a matching result; and
if the matching result is "consistent", determining, based on the device model distribution information, whether the terminal device is the commonly used device; optionally
wherein the method further comprises, if the matching result is "inconsistent", determining that the terminal device is not the commonly used device.

3. The method according to claim 2, wherein determining (S130), based on the device model distribution information, whether the terminal device is the commonly used device comprises:

determining, based on the device model distribution information, a confidence level indicating that the terminal device and the commonly used device are a same device; and
determining, based on the confidence level, whether the terminal device is the commonly used device.

4. The method according to claim 3, wherein determining (S130), based on the device model distribution information, a confidence level indicating that the terminal device and the commonly used device are a same device comprises:

determining a usage rate corresponding to the device model of the terminal device based on the device model distribution information, wherein the usage rate represents a percentage of a first device quantity in a second device quantity, the first device quantity is a quantity of devices that correspond to the device model of the terminal device and that use the application in a historical time period, and the second device quantity is a quantity of all devices that use the application in the historical time period; and
determining the confidence level based on the usage rate and the following formula:

$$P = 1 - X,$$

wherein

P represents the confidence level, and X represents the usage rate; and/or

wherein determining, based on the confidence level, whether the terminal device is the commonly used device comprises:

if the confidence level is greater than or equal to a preset value, determining that the terminal device is the commonly used device; or
if the confidence level is less than a preset value, determining that the terminal device is not the commonly used device.

5. The method according to any one of claims 1 to 4, wherein the method further comprises:

determining whether the device model of the terminal device falls within an abnormal device model list, to obtain a second determining result; and
determining (S 130), based on the first hardware parameter, the second hardware parameter, and the device model distribution information, whether the terminal device is the commonly used device of the target account comprises:
determining, based on the first hardware parameter, the second hardware parameter, the device model distribution information, and the second determining result, whether the terminal device is the commonly used device.

6. The method according to claim 7, wherein determining (S130), based on the first hardware parameter, the second hardware parameter, the device model distribution information, and the second determining result, whether the terminal device is the commonly used device comprises:

if the second determining result indicates that the device model of the terminal device falls outside the abnormal device model list, determining, based on the first hardware parameter, the second hardware parameter, and the device model distribution information, whether the terminal device is the commonly used device; or
if the second determining result indicates that the device model of the terminal device falls within the abnormal device model list, determining that the terminal device is not the commonly used device.

7. The method according to claim 6, wherein determining (S130), based on the first hardware parameter, the second hardware parameter, the device model distribution information, and the second result, whether the terminal device is the commonly used device comprises:

determining, based on the first hardware parameter, the second hardware parameter, and the device model distribution information, a confidence level indicating that the terminal device and the commonly used device are a same device; and
if the confidence level is greater than or equal to a preset value, determining, based on the second determining result, whether the terminal device is the commonly used device; optionally wherein determining (S130), based on the second determining result, whether the terminal device is the commonly used device comprises:

if the second determining result indicates that the device model of the terminal device falls outside the abnormal device model list, determining that the terminal device is the commonly used device; or
if the second determining result indicates that the device model of the terminal device falls within the abnormal device model list, determining that the terminal device is not the commonly used device.

8. The method according to any one of claims 1 to 7, wherein the first hardware parameter comprises at least one of the following:
a model name, a memory capacity, a storage capacity, and screen resolution.

9. The method according to any one of claims 1 to 8, wherein indicating (S140), based on the first determining result, the terminal device to skip or trigger an identity verification procedure comprises:

if the first determining result indicates that the terminal device is the commonly used device, indicating the terminal device to skip the identity verification procedure; or
if the first determining result indicates that the terminal device is not the commonly used device, indicating the terminal device to trigger the identity verification procedure.

10. An electronic device, comprising:

at least one storage medium that stores at least one instruction set used to perform identity verification; and
at least one processor that is communicatively connected to the at least one storage medium, wherein the at least one processor reads the at least one instruction set when running, and performs the following operations based on an indication of the at least one instruction set:

in response to an identity verification request sent by a terminal device, obtaining (S110) a target account of an application corresponding to the identity verification request and a first hardware parameter of the terminal device, wherein the first hardware parameter is a parameter that represents a device model of the terminal device; obtaining (S120) a second hardware parameter corresponding to the target account, and obtaining device model distribution information, wherein the second hardware parameter is a parameter that represents a device model of a commonly used device corresponding to the target account, and the device model distribution information represents a distribution status of each device model in a device that uses the application; determining (S130), based on the first hardware parameter, the second hardware parameter, and the device model distribution information, whether the terminal device is the commonly used device of the target account, to obtain a first determining result; and indicating (S140), based on the first determining result, the terminal device to skip or trigger an identity verification procedure.

11. The electronic device according to claim 10, wherein, to determine whether the terminal device is the commonly used device of the target account, the at least one processor performs the following operations:

matching the first hardware parameter with the second hardware parameter, to obtain a matching result; and if the matching result is "consistent", determining, based on the device model distribution information, whether the terminal device is the commonly used device; optionally wherein the at least one processor performs the following operation: if the matching result is "inconsistent", determining that the terminal device is not the commonly used device.

12. The electronic device according to claim 11, wherein, to determine whether the terminal device is the commonly used device, the at least one processor performs the following operations:

determining, based on the device model distribution information, a confidence level indicating that the terminal device and the commonly used device are a same device; and determining, based on the confidence level, whether the terminal device is the commonly used device; optionally wherein, to determine the confidence level indicating that the terminal device and the commonly used device are a same device, the at least one processor performs the following operations:

determining a usage rate corresponding to the device model of the terminal device based on the device model distribution information, wherein the usage rate represents a percentage of a first device quantity in a second device quantity, the first device quantity is a quantity of devices that correspond to the device model of the terminal device and that use the application in a historical time period, and the second device quantity is a quantity of all devices that use the application in the historical time period; and determining the confidence level based on the usage rate and the following formula:

$$P = 1 - X,$$

wherein
P represents the confidence level, and X represents the usage rate.

13. The electronic device according to claim 12, wherein, to determine whether the terminal device is the commonly used device, the at least one processor performs the following operations:

if the confidence level is greater than or equal to a preset value, determining that the terminal device is the commonly used device; or if the confidence level is less than a preset value, determining that the terminal device is not the commonly used device.

14. The electronic device according to any one of claims 10 to 13, wherein to determine whether the terminal device is the commonly used device, the at least one processor performs the following operations:

determining whether the device model of the terminal device falls within an abnormal device model list, to obtain a second determining result;

and

determining, based on the first hardware parameter, the second hardware parameter, the device model distribution information, and the second determining result, whether the terminal device is the commonly used device.

15. A computer-readable non-transitory storage medium, wherein the computer-readable non-transitory storage medium stores at least one instruction set, and wherein, when the at least one instruction set is executed by at least one processor, the method according to any one of claims 1 to 9 is implemented.

001

FIG. 1

600

FIG. 2

P100

In response to an identity verification request sent by a terminal device, obtain a target account of an application corresponding to the identity verification request and a first hardware parameter of the terminal device, where the first hardware parameter is a parameter that represents a device model of the terminal device    S110

Obtain a second hardware parameter corresponding to the target account, and obtain device model distribution information, where the second hardware parameter is a parameter that represents a device model of a commonly used device corresponding to the target account, and the device model distribution information represents a distribution status of each device model in a device that uses the application    S120

Determine, based on the first hardware parameter, the second hardware parameter, and the device model distribution information, whether the terminal device is the commonly used device of the target account, to obtain a first determining result    S130

Indicate, based on the first determining result, the terminal device to skip or trigger an identity verification procedure    S140

FIG. 3

| 2088XXXX342 | XX14pro#8G#256G#1080*2042 | 100 | ※ |
| | XX Plus#8G#512G#1080*2042 | 12 | ※ |
| | xx laptop#16G#1T#4K | 3 | |

FIG. 4

EP 4 629 562 A1

Start

Obtain a first hardware parameter

Second hardware parameter

Storage module

Is the first hardware parameter consistent with the second hardware parameter? — No

Yes

Device model distribution information

First detection module

Is a confidence level greater than or equal to a preset value #B? — No

Yes

Abnormal device model list

Second detection module

Does a device model corresponding to a terminal device fall within the abnormal device model list? — Yes

No

The terminal device is a commonly used device

The terminal device is not a commonly used device

Indicate to skip an identity verification procedure

Indicate to trigger an identity verification procedure

End

FIG. 5

22

FIG. 6

FIG. 7

**EUROPEAN SEARCH REPORT**

Application Number

EP 24 22 0011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/121387 A1 (CHINA UNIONPAY CO LTD [CN]) 5 July 2018 (2018-07-05) * paragraphs [0008], [0021], [0034], [0039], [0053], [0056], [0061], [0064]; claim 15 * | 1-15 | INV. H04L9/40 |
| A | CN 113 191 892 A (INDUSTRIAL & COMMERCIAL BANK OF CHINA CO LTD) 30 July 2021 (2021-07-30) * paragraphs [0011] - [0015]; claim 9 * | 1-15 | |
| A | CN 109 002 733 A (ALIBABA GROUP HOLDING LTD) 14 December 2018 (2018-12-14) * paragraphs [0033], [0065]; claims 1, 2, 6 * | 1-15 | |

TECHNICAL FIELDS
SEARCHED        (IPC)

H04L
G06F

The present search report has been drawn up for all claims

| Place of search | Date of completion of the search | Examiner |
|---|---|---|
| The Hague | 31 January 2025 | Pichler Trauber, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

ANNEX TO THE EUROPEAN SEARCH REPORT
ON EUROPEAN PATENT APPLICATION NO.                    EP 24 22 0011

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | | Publication date | Patent family member(s) | | Publication date |
|---|---|---|---|---|---|
| WO 2018121387 | A1 | 05-07-2018 | CN | 106991317 A | 28-07-2017 |
| | | | TW | 201824108 A | 01-07-2018 |
| | | | WO | 2018121387 A1 | 05-07-2018 |
| CN 113191892 | A | 30-07-2021 | NONE | | |
| CN 109002733 | A | 14-12-2018 | NONE | | |

EPO FORM P0459

For more details about this annex : see Official Journal of the European Patent Office, No. 12/82